Europäisches Patentamt

European Patent Office

Office européen des brevets

(19)

(11) Veröffentlichungsnummer: **0 220 754 B1**

# EUROPÄISCHE PATENTSCHRIFT

(12)

(45) Veröffentlichungstag der Patentschrift: **06.11.91**

(21) Anmeldenummer: **86201555.9**

(22) Anmeldetag: **10.09.86**

(51) Int. Cl.⁵: **A01D 34/70, A01D 34/63**

(54) **Rasentraktor mit heckseitigem Grasfangbehälter.**

(30) Priorität: **13.09.85 DE 3532700**
**06.12.85 DE 3543165**

(43) Veröffentlichungstag der Anmeldung:
**06.05.87 Patentblatt  87/19**

(45) Bekanntmachung des Hinweises auf die
Patenterteilung:
**06.11.91 Patentblatt  91/45**

(84) Benannte Vertragsstaaten:
**AT BE CH FR GB IT LI LU NL SE**

(56) Entgegenhaltungen:
**EP-A- 0 072 572**
**DE-A- 2 537 120**
**US-A- 3 969 876**
**US-A- 4 106 272**
**US-A- 4 532 755**

(73) Patentinhaber: **GUTBROD-WERKE GMBH**
**Industriegelände**
**W-6601 Saarbrücken-Bübingen/Saar(DE)**

(72) Erfinder: **Klever, Manfred**
**Scheidter Strasse 40**
**W-6601 Saarbrücken-Scheidterberg(DE)**
Erfinder: **Rott, Karl-Heinz**
**Waldstrasse 17**
**W-6601 Saarbrücken-Bübingen(DE)**

(74) Vertreter: **Flaccus, Rolf-Dieter Patentanwälte**
**Klöpsch & Flaccus**
**An Gross St. Martin 6**
**W-5000 Köln 1(DE)**

**Beschreibung**

Die Erfindung betrifft einen Rasentraktor mit zwischen den vier Laufrädern angeordnetem schneckenartigem Mähwerksgehäuse und Mähwerk, dessen rotierendes Mähmesser zur Förderung des Schnittgutes mit angeformten Windflügeln versehen ist, mit einem bis über einen heckseitig lösbar gehalterten Grasfangsack aufwärts führenden Auswurfkanal, und mit einer um eine waagerechte Schwenkachse schwenkbar gelagerten Grasfanghaube, die in waagerechter Schwenklage den Grasfangsack oben verschließt.

Da bei einem vierrädrigen Rasentraktor zwischen dem Mähwerk und dem heckseitigen Grasfangsack eine durch das erforderliche Fahrwerk bedingte relativ große Entfernung vorgegeben ist, wird der Auswurfkanal des Mähwerkgehäuses im Anschluß an dessen Schneckengang als geschlossener Kanal ausgeführt, um die Gebläseleistung des rotierenden, mit Windflügeln versehenen Mähmessers zum Transport des Schnittgutes optimal zu nutzen. Ein geschlossener Auswurfkanal setzt sich jedoch leicht zu, insbesondere dann, wenn das Schnittgut nicht ganz trocken ist, so daß eine vollständige Füllung des Grasfangsackes, die für die wirtschaftliche Arbeitsweise des Rasentraktors wünschenswert ist, häufig nicht zu erreichen ist.

Als Stand der Technik ist zunächst die DE-OS 34 06 606 zu nennen, die sich mit dem Problem des Schnittgut-Transportes weniger befaßt. Mit der Dynamik des Schnittgut-Transportes befassen sich jedoch näher die US-PS 45 32 755 und 41 06 272, wonach Maßnahmen bekannt sind, einen Rückstau im Auswurfkanal zu vermeiden, der zu dessen Verstopfung führen kann. Diese Maßnahmen bestehen im Grunde darin, der das Schnittgut transportierenden Luft nach dem Eintritt der Strömung unter den Deckel bzw. die Grasfanghaube Gelegenheit zu geben, ins Freie zu entweichen, ohne Schnittgut mitzunehmen. So ist es bekannt, den Deckel mit einem gitterförmigen Auslaß an geeigneter Stelle zu versehen, der nicht gerade vom Luftstrom angeblasen wird, um einen Austritt des Schnittgutes zu vermeiden, wohl aber die Luft ins Freie austreten läßt. Die einfachste Möglichkeit des Luftaustrittes ohne gleichzeitigen Austrag von Schnittgut besteht darin, den Grasfangsack luftdurchlässig zu machen (EP-A1 72572). Diese setzt jedoch voraus, daß der Grasfangsack aus einem Textilgewebe besteht und dementsprechend teuer ist, so daß sich diese Methode für Wegwerfsäcke nicht eignet. Daher wird in der DE-OS 25 37 120 vorgeschlagen, einen luftundurchlässigen Sammelbeutel aus Kunststoff in einen äußeren luftdurchlässigen Sack einzusetzen, so daß unterhalb des Deckels eine Expansionszone für die einströmende Luft entsteht. Das Schnittgut wird in den inneren Sammelbeutel geleitet, wogegen die Luft die Möglichkeit hat, über den Zwischenraum zwischen den beiden ineinander gesteckten Beuteln durch den äußeren luftdurchlässigen Sack zu entweichen. Der innere Sammelbeutel kann daher als Wegwerfsack ausgebildet werden.

Die Problematik des Schnittgut-Transportes ist besonders evident bei Rasentraktoren mit seitlichem Grasauswurf aus dem Mähwerksgehäuse und dementsprechend seitlich aufwärts geführtem Auswurfkanal nach der US-PS 45 32 755, der EP-A1-72 572 sowie der DE-A1-25 37 120, soweit in der letzten Druckschrift ein selbstfahrender Rasentraktor beschrieben ist.

Von diesen zeigen die US-PS 45 32 755 sowie die EP-A1-72 572 einen wesentlichen Nachteil von außerhalb der Konfiguration des Fahrgestells eines Rasentraktors geführtem, gebogenen Auswurfkanal, der darin besteht, daß der schwenkbare Deckel bzw. die Grasfanghaube mit einem Ausschnitt versehen sein muß, in den der rohrförmige Auswurfkanal eintritt, wenn der Deckel in waagerechter Schwenklage den oder die Grasfangsäcke oben verschließt. Diese Deckel-Aussparung muß abgedichtet werden, weil sie zu nahe an der Austrittsöffnung des Auswurfkanals liegt.

Ein weiterer Nachteil von Rasentraktoren mit seitlichem Auswurfkanal besteht darin, daß ein Mähen ohne Sammeln des Schnittgutes in einem oder zwei Grasfangsäcken nur möglich ist, wenn der seitliche Auswurfkanal abgenommen wird. Dann wird das Schnittgut seitlich unkontrolliert auf die geschnittene Rasenfläche ausgeblasen.

Die Erfindung macht es sich zur Aufgabe, bei einem Rasentraktor mit rückseitigem Auswurf den Transport des Schnittgutes so zu gestalten, daß ein Rückstau innerhalb eines Auswurfkanals vermieden wird, ohne daß ein Deckel bzw. eine Grasfanghaube mit einer Luftaustrittsöffnung versehen werden muß oder ein luftundurchlässiger Grasfangbehälter obligatorisch ist, und daß dabei die Einleitung des Schnittgutes in einen Grasfangsack bzw. die Ablage des Schnittgutes hinter dem Rasentraktor beim Mähen ohne Grasfangsack, dem sogenannten "Mulchen", ausschließlich im freien Fall und geordnet erfolgt.

Diese Aufgabe wird bei einem Rasentraktor gemäß dem Oberbegriff des Anspruchs 1 dadurch gelöst, daß der Auswurfkanal auch mit seiner unteren Begrenzung aus dem Mähwerksgehäuse aufsteigend ausgebildet wird und sich unterhalb der quer zur Fahrtrichtung angeordneten Schwenkachse der Grasfanghaube hindurch bis in den unmittelbaren Bereich hinter der Schwenkachse erstreckt, so daß sich seine Austrittsöffnung beim Mähen mit Grasfangsack mit waagerechter Schwenklage der Grasfanghaube mit zumindest dem größeren Teil ihres lichten Querschnitts im Grasfangsack, beim Mähen ohne Grasfangsack mit vertikaler Hängelage der Grasfanghaube im Abstand von dieser befindet, und daß der Auswurfkanal in bezug auf seine Länge, Steigung und Windung strömungstechnisch so ausgelegt wird, daß unter der Gebläsewirkung des mit den Windflügeln versehenen rotierenden Mähmessers ein abrißfreier Transport des Schnittgutes bis zur Austrittsöffnung stattfindet.

Die Erfindung weist somit nicht nur den Weg, durch eine turbulenzfreie Strömung im Schnittgut-Transport das Anhaften von Schnittgut an der oberen Wandung des unten offenen Auswurfkanals zu vermeiden, sondern es wird zugleich durch die Öffnung des Auswurfkanals für die vom Schnittgut befreite Luft eine Austrittsmöglichkeit nach unten geschaffen, so daß es keinerlei besonderer Öffnungen in der Grasfanghaube mehr bedarf und luftundurchlässige Wegwerfsäcke als Grasfangsäcke verwendet werden können. Aufgrund der abrißfreien Strömung kann ein Rückstau in dem unten offenen Auswurfkanal von vornherein nicht mehr entstehen. Für den abrißfreien Schnittgut-Transport ist es dabei zu empfehlen, daß die obere Wandung des Austrittskanals unter einem konstanten Steigungswinkel verläuft.

Da der Auswurfkanal sich beim Mähen mit Grasfangsack mit seiner Austrittsöffnung unterhalb der sich quer zur Fahrtrichtung erstreckenden Schwenkachse hindurch bis in die Grasfanghaube erstreckt, kann die Austrittsöffnung hinsichtlich einer guten Füllung des Grasfangsackes optimal gestaltet werden. Da das schräg aufwärts geblasene Schnittgut im Winkel auf die Grasfanghaube auftrifft, könnte es jedoch vorkommen, daß das Schnittgut nach seinem Aufprall gegen die Grasfanghaube unter einem spitzen Winkel quasi reflektiert wird, so daß das Schnittgut im Grasfangsack einseitig gehäuft aufgenommen und ein Teil des Volumens des Grasfangsackes nicht optimal ausgenutzt wird.

Um dies zu vermeiden und ein über den Querschnitt des Grasfangsackes gleichmäßiges Absinken des Schnittgutes zu fördern, wird gemäß der weiteren Erfindung empfohlen, daß die obere Wandung des ansteigenden Auswurfkanals im letzten Drittel nach oben gekrümmt verläuft, und daß die Grasfanghaube mit einer gekrümmten Ausbuchtung versehen ist, deren Krümmungsmittelpunkt der Innenseite der Grasfanghaube zugeordnet ist und die bei waagerechter Schwenklage der Grasfanghaube in der gekrümmten Fluchtlinie der oberen Wandung des Auswurfkanals beginnt. Hierdurch wird erreicht, daß die aufwärts gerichtete Strömung des Schnittgutes beim Austritt aus dem Auswurfkanal entsprechend der Krümmung der Ausbuchtung reflektionslos umgelenkt wird, wobei das Schnittgut über den Querschnitt des Grasfangsackes gleichmäßig verteilt herabfällt. Dieser Effekt wird noch unterstützt durch eine Art Wirbelung, die durch die gekrümmte Ausbuchtung der Grasfanghaube hervorgerufen wird.

Die Krümmung der oberen Wandung des Auswurfkanals, die der Krümmung der Ausbuchtung der Grasfanghaube entgegengesetzt ist, verläuft zweckmäßig nach einer Exponentialfunktion. Dies bedeutet strömungstechnisch, daß im Bereich der Auswurföffnung des Auswurfkanals in der Nähe dessen oberer Wandung ein Unterdruck entsteht, der einen beträchtlichen Teil des Schnittgutes nach oben weist und in die Bahn entlang der gekrümmten Ausbuchtung der Grasfanghaube zwingt. Auf diese Weise wird der überwiegende Teil des Schnittgutes ausschließlich im freien Fall und in guter Verteilung über den Querschnitt des Grasfangsackes in diesen eingeleitet.

Eine weitere Folge des Erfindungsmerkmals hinsichtlich der Lage der Austrittsöffnung des Auswurfkanals unterhalb der waagerechten Schwenkachse für die Grasfanghaube besteht darin, daß die nicht mit einem Auslaßgitter versehene Grasfanghaube in eine senkrechte Hängelage vor die Austrittsöffnung des Auswurfkanals geschwenkt werden kann, um beim Mähen ohne Grasfangsack das Schnittgut geordnet im freien Fall auf die geschnittene Rasenfläche abzulegen. Hierzu wird in Weiterentwicklung von Fig.3 der EP-A-72 572 eine Halterung für einen Grasfangsack dahingehend vorgeschlagen, daß die waagerechten Auslegerarme, die in bekannter Weise sich waagerecht im Abstand parallel zueinander in Fahrtrichtung erstrecken und für schlauchartige Aufnahmen des Grasfangsackes ausgelegt sind, aus dem Schwenkweg der Grasfanghaube entfernbar sind, womit die Grasfanghaube bis zur senkrechten Hängelage schwenkbar ist. Bei dem Rasentraktor nach der erwähnten Literaturstelle ist es zwar möglich, die Halterungen für zwei seitlich benachbarte Grasfangsäcke aus dem Schwenkweg des Deckels zu entfernen, jedoch ist der Deckel trotzdem nicht in senkrechte Hängelage schwenkbar, weil der geschlossene Auswurfkanal durch eine seitliche Aussparung im Deckel sich erstreckt.

Die senkrechte Hängelage der Grasfanghaube quer zur Austrittsöffnung des Auswurfkanals erfordert wegen der Umlenkung der Strömung und der gekrümmten Ausbuchtung der Grasfanghaube besondere Maßnahmen, einen konstruktiv nicht zu umgehenden Spalt zwischen dem Ende des Auswurfkanals und dem Beginn der gekrümmten Ausbuchtung in der waagerechten Lage des Grasfangsackes zu verschließen. Hierzu wird gemäß der Erfindung die Schwenkachse der Grasfanghaube in Richtung des Fahrersitzes von einer sich über die Breite der Grasfanghaube erstreckenden, mit der Schwenkachse als Krümmungsmittelpunkt gekrümmten, ortsfesten Verschalung umgeben, die von einem rückwärtigen Randteil der Grasfanghaube bei jeder deren Schwenklagen unter Abdichtung umgriffen ist.

Weitere Erfindungsmerkmale hinsichtlich Ausgestaltung der Grasfanghaube sowie der Halterung für einen Grasfangsack sind den Patentansprüchen 7 - 11 sowie der Zeichnung zu entnehmen.

In der Zeichnung ist ein Ausführungsbeispiel eines Rasentraktors gemäß der Erfindung dargestellt, und zwar zeigen

Fig. 1 die Heckpartie in schaubildlicher Darstellung zur Verdeutlichung der Lagerung für die schwenkbare Grasfanghaube sowie die Halterung für einen Wegwerfsack,

Fig. 2 die Heckpartie des Fahrgestells mit eingehängtem Wegwerfsack in schaubildlicher Darstellung,

Fig. 3 die Darstellung nach Fig. 2 ohne Wegwerfsack und mit senkrecht hängender Grasfanghaube,

Fig. 4 eine schematische Draufsicht auf die Heckpartie mit schematisch angedeutetem Mähwerksgehäuse,

Fig. 5 eine Seitenansicht von Fig. 4 zur Darstellung der Steigung des Auswurfkanals,

Fig. 6 einen Querschnitt durch die in waagerechter Schwenklage befindliche Grasfanghaube sowie den letzten Teil des Auswurfkanals nach der Linie I - I in Fig. 7 und

Fig. 7 eine Draufsicht von Fig. 6, die Grasfanghaube teilweise weggeschnitten.

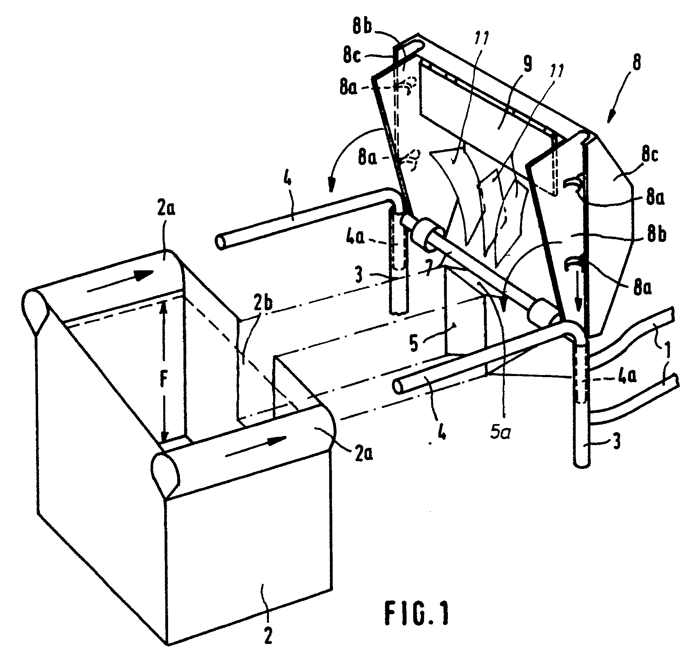

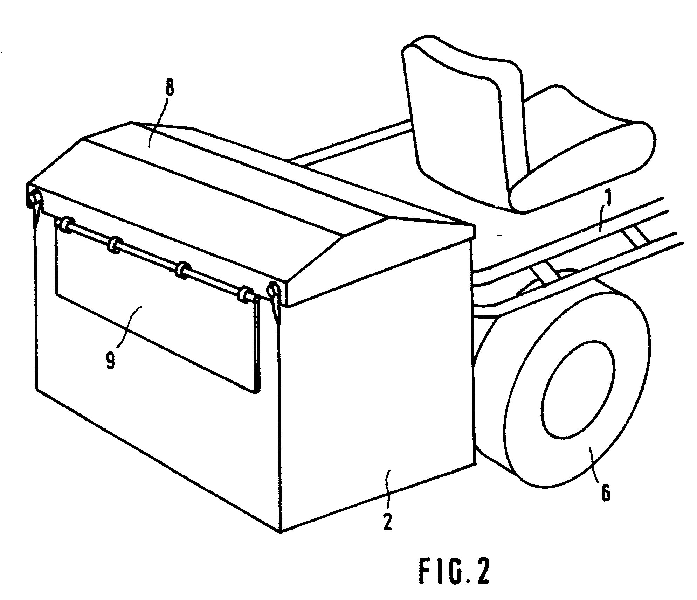

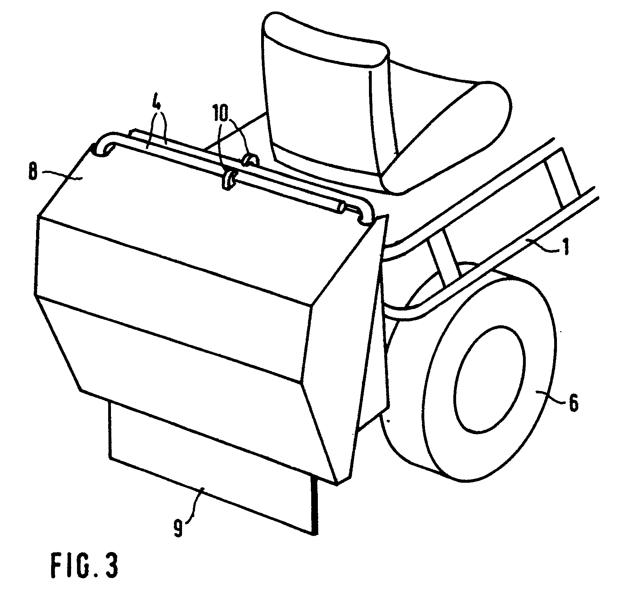

Das Fahrwerk bzw. Fahrgestell besteht in Fig. 2 und 3 aus einem Rohrrahmen 1, der heckseitig zwei im Abstand der Breite des Wegwerfsackes 2 angeordnete senkrechte Führungsrohre 3 aufweist, in die die abgewinkelten Arme 4a von waagerechten Auslegearmen 4 einsetzbar sind. Die abgewinkelten Arme 4a sind in den Führungsrohren 3 drehbar, womit die Auslegearme 4 in waagerechter Ebene schwenkbar sind. In der in Fig. 1 dargestellten Schwenklage verlaufen die Auslegearme parallel zueinander und können in die schlauchförmigen Aufnahmen 2a des Wegwerfsackes 2 eingefädelt werden, die an zwei parallelen Oberkanten desselben angeordnet sind.

Der Wegwerfsack 2 hat an einer Wand eine Öffnung 2b, in die das zwischen den beiden Führungsrohren 3 in Fig. 1 erkennbare Ende des unten offenen Auswurfkanals 5 eintritt, wenn der Wegwerfsack 2 in der aus Fig. 2 ersichtlichen Aufnahmelage ist. Die obere waagerechte Kanalwand 5a sollte etwas oberhalb des Grasfangsackes 2 enden, um im Grasfangsack eine optimale Füllhöhe F zu erhalten.

Die Auswurföffnung des Auswurfkanals 5 liegt relativ hoch, so daß das Schnittgut ausschließlich im freien Fall in den Wegwerfsack eingeleitet wird. Hierzu ist der schneckenartige Auswurfkanal 5 des bis zwischen die hinteren Laufräder 6 reichenden Mähwerksgehäuse 12 über seine gesamte Abwicklungslänge unten offen und strömungstechnisch günstig derart gewunden ansteigend ausgeführt, daß unter der Gebläsewirkung des mit Windflügeln 13 versehenen rotierenden Mähmessers 14 ein abrißfreier Schnittgut-Transport bis zur in Fig. 1 erkennbaren Auswurföffnung stattfindet. Anzustreben ist, daß der Auswurfkanal 5, der mit der sogenannten Schnecke schon im Mähwerksgehäuse beginnt, in seiner Abwicklung gerade ist, was konstante Steigung bedeutet.

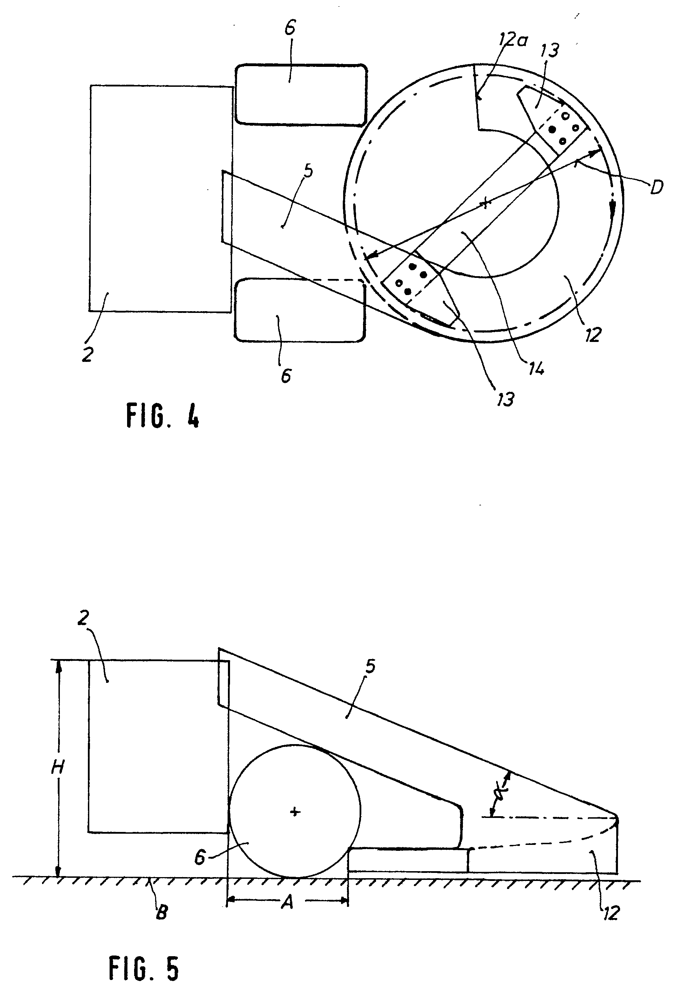

Für den abrißfreien, d.h. turbulenzfreien Schnittgut-Transport innerhalb des unten offenen Auswurfkanals 5 sind einige wesentliche Parameter aus Fig. 4 und 5 ersichtlich. Hier ist zu erkennen, daß der Auswurfkanal 5, nachdem er sich aus dem Mähwerksgehäuse 12 abhebt, mit konstantem Steigungswinkel $\alpha$ gerade verläuft. Er sollte auch auf diesem Bereich möglichst kurz sein, weshalb das Mähwerksgehäuse 12 soweit zum Fahrzeugheck hin angeordnet wird, daß es zum Teil bis zwischen die hinteren Laufräder 6 reicht. Dementsprechend ist der Messerkreisdurchmesser D und/oder die Spurbreite dieser Laufräder zu wählen. Der kurze Abstand A (Fig. 5) zwischen dem Mähwerksgehäuse 12 und dem Kanalende erfordert im Hinblick auf die möglichst hohe Positionierung der Auswurföffnung über dem Boden B (Maß H in Fig. 5) eine entsprechende Gestaltung des gewundenen Teils des Auswurfkanals, der sogenannten Schnecke, der im Ausführungsbeispiel nach Fig. 4 etwa bei der Linie 12a beginnt, so daß die Schneckenwindung und der anschließende Auswurfkanal 5 ziemlich steil verlaufen. Schließlich ist es von Vorteil, das Mähwerksgehäuse 12 und den Auswurfkanal (weil er unten offen ist) aus einem einzigen Kunststoff-Spritzgußteil zu fertigen. Die Innenwandung des Auswurfkanals 5 bleibt damit glatt und rostfrei, was ebenfalls ein Anhaften von Schnittgut und ein Zuwachsen des Kanals verhindert.

Zwischen den beiden Führungsrohren 3 des Rohrrahmens 1 verläuft unmittelbar oberhalb der Austrittsöffnung des Auswurfkanals 5 eine waagerechte Schwenkachse 7 für eine Grasfanghaube 8, die in Fig. 1 in hochgeschwenkter Lage ist, damit die waagerechten Auslegearme 4 frei sind, um in die schlauchartigen Aufnahmen 2a des Wegwerfsackes 2 eintreten zu können. Man erkennt an der Grasfanghaube 8 beidseitig halbrunde, schalenförmige Auflagenasen 8a, die sich auf die aufgeschobenen schlauchartigen Aufnahmen 2a auflegen und den Wegwerfsack 2 festklemmen, wenn die Grasfanghaube 8 in der waagerechten Schwenklage nach Fig. 2 ist. Die Auflagenasen 8a sind im Ausführungsbeispiel deshalb halbrund, weil sie die runden Auslegearme 4 teilweise umfassen sollen.

Die Grasfanghaube 8 ist mit sich radial erstreckenden Seitenwänden 8b versehen, die bei waagerechter Schwenklage der Grasfanghaube 8 innerhalb des eingehängten Wegwerfsackes 2 liegen und zu dessen Stabilität beitragen. Diese Seitenwände 8b bilden mit den im Abstand verlaufenden äußeren Seitenwänden 8c paarweise je eine Justierrinne, in der die Auflagenasen 8a derart vertieft angeordnet sind, daß die Auslegearme 4 beim Abschwenken der Grasfanghaube 8 auf Parallelität ausgerichtet werden, bevor die Auflagenasen ihre Klemmlage erreichen. Hierdurch werden irgendwelche Abweichungen in der Parallelität der Auslegearme 4 nach dem Einhängen eines Grasfangsackes 2 selbsttätig ausgeglichen. An der parallel zur Schwenkachse 7 verlaufenden freien Kante der Grasfanghaube 8 ist eine Prallschutzplatte 9 frei schwenkbar angeordnet, die bei jeder Schwenklage der Grasfanghaube durch ihr Eigengewicht senkrecht hängt und deren Breite kleiner ist als die lichte Weite des Wegwerfsackes 2. Beim Mähen mit Wegwerfsack gelangt diese Prallschutzplatte 9 in ihrer Hängelage außer halb des Wegwerfsackes 2, was in Fig. 2 dargestellt ist.

Auf der Innenseite der Grasfanghaube 8 sind drei Luftleitrippen 11 vorgesehen, die in waagerechter Schließlage der Grasfanghaube vor der Auswurföffnung des Auswurfkanals 5 beginnen und das einströmende Schnittgut über den waagerechten Querschnitt des Grasfangsackes 2 verteilen.

Fig. 3 zeigt die Situation beim "Mulchen" ohne Wegwerfsack, in der die Grasfanghaube 8 in senkrechter Hängelage ist und quer zu der Auswurföffnung des Auswurfkanals 5 verläuft, so daß das Schnittgut gegen die Grasfanghaube 8 geblasen wird und auf die Rasenoberfläche herabfällt. Die Prallschutzplatte 9 hängt dann in Verlängerung der Grasfanghaube frei pendelnd nach unten und dient auch als Schutz vor wegfliegenden Steinen.

Um die senkrechte Hängelage nach Fig. 3 zu erreichen, müssen die beiden Auslegearme 4 aus den Führungsrohren 3 herausgezogen werden; sie dienen indessen nach Fig. 3 nach dem Wiedereinsetzen in der quer zur Fahrtrichtung des Rasentraktors verlaufenden Einsteck-Lage zur Sicherung der senkrechten Hängelage der Grasfanghaube 8, oder zumindest einer der Auslegearme 4. Hierzu ist die Grasfanghaube 8 in der Nähe ihrer Schwenklagerung auf der Achse 7 außen mit einer Schnapphalterung 10 versehen, in die mindestens einer der Auslegearme 4 einrastet, wenn er von oben mit seinem Arm 4a (Fig. 1) in der Querlage in sein Führungsrohr 3 eingesetzt wird.

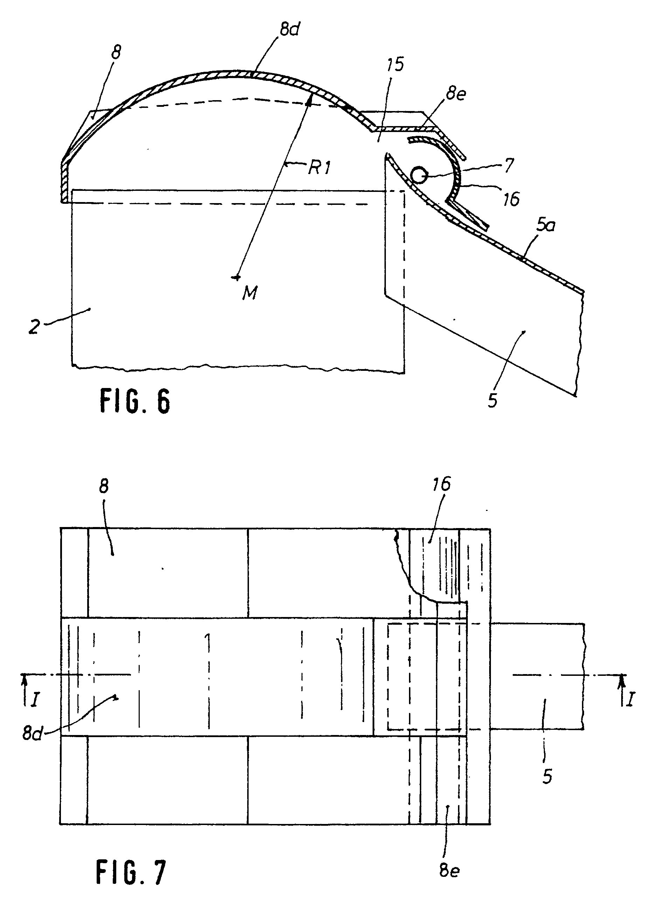

In Fig. 6 erkennt man den letzten Teil des Auswurfkanals 5, der im Bereich seiner Auswurföffnung zum Teil in den nur teilweise dargestellten Grasfangsack 2 hineinragt und dessen obere Wandung 5a im letzten Drittel nach einer Exponentialfunktion nach oben gekrümmt verläuft. Die um die waagerechte Schwenkachse 7 schwenkbare Grasfanghaube 8 ist in waagerechter Position dargestellt, um den Grasfangsack 2 zu verschließen. Im mittleren Bereich und in Verlängerung des Auswurfkanals 5 ist die Grasfanghaube 8 mit einer gekrümmten Ausbuchtung 8d versehen, deren Krümmungsmittelpunkt M der Innenseite der Grasfanghaube zugeordnet ist. Der Krümmungsradius R1 dieser Ausbuchtung 8d und der Krümmungsmittelpunkt M sind so gewählt, daß die gekrümmte Ausbuchtung 8d in der gekrümmten Fluchtlinie der oberen Wandung 5a des Auswurfkanals 5 beginnt, wobei ein Spalt 15 mit Rücksicht auf die senkrechte Hängelage der Grasfanghaube 8 konstruktiv bedingt ist. Durch die Aufwärtskrümmung der oberen Wandung 5a des Auswurfkanals 5 wird die Strömung des Schnittgutes nach oben hin konzentriert und gelangt reflektionslos in die Bahn, die durch die Krümmung der Ausbuchtung 8d vorgegeben ist. Die dem Schnittgut innewohnende Strömungsenergie wird durch Verwirbelung und Reibung an der Ausbuchtung 8d und durch die wirkenden Gravitationskräfte vernichtet bzw. in Fallenergie umgewandelt, so daß das Schnittgut in freiem Fall und in guter Verteilung über den Querschnitt des Grasfangsackes 2 herabfällt.

Damit durch den notwendigen Spalt 15 kein Schnittgut nach außen gelangt, ist die Schwenkachse 7 der Grasfanghaube 8 in Richtung des Fahrersitzes (nach rechts) von einer sich über die Breite der Grasfanghaube erstreckenden, mit der Schwenkachse als Krümmungsmittelpunkt gekrümmter, ortsfesten Verschalung 16 umgeben. Diese Verschalung ist von einem rückwärtigen Randteil 8e der Grasfanghaube auch im Bereich der Ausbuchtung 8d derart umgriffen, daß zwischen dem Randteil 8e und der ortsfesten Verschalung 16 bei jeder Schwenklage der Grasfanghaube 8 eine Abdichtung nach außen sichergestellt ist.

**Patentansprüche**

1. Rasentraktor mit zwischen den vier Laufrädern (6) angeordnetem, schneckenartigen Mähwerksgehäuse (12) und Mähwerk, dessen rotierendes Mähmesser (14) zur Förderung des Schnittgutes mit angeformten Windflügeln (13) versehen ist, und mit einem als auf seiner gesamten Länge unten offener Kanal ausgebildeten Auswurfkanal (5) für das Schnittgut, der mit seiner oberen Begrenzung aus dem Mähwerksgehäuse aufsteigend zwischen den hinteren Laufrädern (6) des Rasentraktors hindurchgeführt ist, sowie mit einer Befestigungsvorrichtung für die heckseitige, lösbare Anbringung eines Grasfangsackes (2) und mit einer um eine waagerechte Schwenkachse (7) schwenkbar gelagerten, in waagerechter Schwenklage einen ggf. heckseitig angebrachten Grasfangsack oben verschließenden Grasfanghaube (8), dadurch gekennzeichnet, daß der Auswurfkanal (5) auch mit seiner unteren Begrenzung aus dem Mähwerksgehäuse aufsteigend ausgebildet ist und sich unterhalb der quer zur Fahrtrichtung angeordneten Schwenkachse (7) der Grasfanghaube (8) hindurch bis in den unmittelbaren Bereich hinter der Schwenkachse erstreckt, so daß sich seine Austrittsöffnung beim Mähen mit Grasfangsack (2) mit waagerechter Schwenklage der Grasfanghaube mit zumindest dem größeren Teil ihres lichten Querschnitts im Grasfangsack, beim Mähen ohne Grasfangsack mit vertikaler Hängelage der Grasfanghaube im Abstand von dieser befindet, und daß der Auswurfkanal in bezug auf seine Länge, Steigung und Windung strömungstechnisch so ausgelegt ist, daß unter der Gebläsewirkung des mit den Windflügeln (13) versehenen, rotierenden Mähmessers (14) ein abrißfreier Transport des Schnittgutes bis zur Austrittsöffnung stattfindet.

2. Rasentraktor nach Anspruch 1, dadurch gekennzeichnet, daß die obere Wandung (5a) des Auswurfkanals (5) vom mähwerkseitigen nach dem austrittsseitigen Ende zu über mindestens den größeren Teil ihrer Länge unter einem konstanten Steigungswinkel ($\alpha$) verläuft.

3. Rasentraktor nach Anspruch 1 oder 2, dadurch gekennzeichnet, daß die obere Wandung (5a) des ansteigenden Auswurfkanals (5) nach dessen austrittsseitigen Ende zu im letzten Teil nach oben gekrümmt verläuft, und daß die Grasfanghaube (8) mit einer gekrümmten Ausbuchtung (8d) versehen ist, deren Krümmungsmittelpunkt (M) zu der Innenseite der Grasfanghaube zugeordnet ist, und die bei waagerechter Schwenklage der Grasfanghaube in der gekrümmten Fluchtlinie der oberen Wandung des Auswurfkanals beginnt.

4. Rasentraktor nach Anspruch 3 , dadurch gekennzeichnet, daß die Krümmung der oberen Wandung (5a) des Auswurfkanals (5) nach einer Exponentialfunktion verläuft.

5. Rasentraktor nach einem der Ansprüche 1 bis 4 mit sich waagerecht im Abstand parallel zueinander in Fahrtrichtung erstreckenden Auslegerarmen (4) für schlauchartige Aufnahmen (2a) des Grasfangsackes (2), dadurch gekennzeichnet, daß die waagerechten Auslegerarme (4) zum Mähen ohne Grasfangsack (2) bei vertikaler Hängelage der Grasfanghaube (8) aus dem Schwenkweg der Grasfanghaube (8) entfernbar sind.

6. Rasentraktor nach einem der Ansprüche 1-5, dadurch gekennzeichnet, daß die Schwenkachse (7) der Grasfanghaube (8) in Richtung des Fahrersitzes von einer sich über die Breite der Grasfanghaube erstreckenden, mit der Schwenkachse als Krümmungsmittelpunkt gekrümmten, ortsfesten Verschalung (16) umgeben ist, die von einem rückwärtigen Randteil (8e) der Grasfanghaube bei jeder deren Schwenklagen unter Abdichtung umgriffen ist.

7. Rasentraktor nach einem der Ansprüche 1-6, dadurch gekennzeichnet, daß an der parallel zur Schwenkachse (7) verlaufenden freien Kante der Grasfanghaube 18) eine Prallschutzplatte (9) schwenkbar angeordnet ist, die bei jeder Schwenklage der Grasfanghaube senkrecht hängt und deren Breite kleiner ist als die lichte Weite eines Grasfangsackes (2).

8. Rasentraktor nach Anspruch 5, dadurch gekennzeichnet, daß die waagerechten Auslegerarme (4) agewinkelte Arme (4a) haben, die im Abstand der Breite des Grasfangsackes (2) angeordnete senkrechte Führungsrohre (3) wahlweise in oder quer zur Fahrtrichtung einsteckbar sind.

9. Rasentraktor nach Anspruch 8, dadurch gekennzeichnet, daß die Grasfanghaube (8) mit die Auslegerarme (4) teilweise umfassenden schalenförmigen Auflagenasen (8a) versehen ist, die die waagerechte Schwenklage der Grasfanghaube begrenzen und zugleich die aufgeschobenen schlauchartigen Aufnahmen (2a) des Grasfangsackes (2) auf den Auslegerarmen festklemmen.

10. Rasentraktor nach Anspruch 9, dadurch gekennzeichnet, daß die Auflagenasen (8a) zwischen im Abstand voneinander verlaufenden, jeweils eine Justierrinne bildenden Seitenwandpaaren (8b, 8c) derart vertieft angeordnet sind, daß die Auslegerarme (4) beim Abschwenken der Grasfanghaube (8) auf Parallelität ausgerichtet werden, bevor die Auflagenasen ihre Klemmlage erreichen.

11. Rasentraktor nach Anspruch 8, dadurch gekennzeichnet, daß die Grasfanghaube (8) in der Nähe der Schwenklagerung außen mit einer Schnapphalterung (10) versehen ist, in die zur Sicerunng der Hängelage der Grasfanghaube mindestens einer zur Auslegerarme (4) eingreift, wenn dieser quer zur Fahrtrichtung in sein Führungsrohr (3) eingesetzt ist.

**Claims**

1. A lawn tractor which includes a worm type mower housing (12) and a mower mechanism arranged between the four running wheels (6), the rotary mower blade (14) of which being provided with air vanes (13) formed thereon for conveyance of grass clippings, a discharge conduit (5) for the grass clippings formed as a channel being open at the bottom over its entire length, the upper end thereof which slopes upwardly from the mower housing (12) being passed between the rear traction wheels (6), a fastening means for detachably mounting a grass catcher bag (2) at the rear of the tractor, and a grass catcher hood (8) pivotally mounted about a horizontal swivel pin (7) and adapted, when in the horizontal swivel position, to cover the top of a grass catcher bag which may optionally be arranged at the rear end of the tractor, characterized in that also the lower end of the discharge conduit (5) ascends from the mower housing and extends below the swivel shaft (7) of the grass catcher hood (8), which is positioned in transverse direction relative to the direction of travel, up to the region immediately behind the swivel shaft so that at least the major part of the clear opening of the outlet end, during mowing with a grass catcher bag (2) and horizontal swivel position of the grass chatcher hood, is positioned within said grass catcher bag and, during mowing without grass catcher bag and vertical hanging position of the grass catcher hood, said outlet is positioned distantly from said hood, and that the discharge conduit, with respect to its length, inclination and winding, is formed in conformity with flow rates in such a manner that the conveyance of the grass clippings to the outlet end takes place free from turbulence and interruption under the blowing effect of the rotary mower blade (14) provided with the air vanes (13).

2. The lawn tractor according to claim 1 characterized in that at least the major part of the length of the upper wall section (5a) of the discharge conduit (5) extends from the mower housing end towards the outlet end at a constant angle of inclination ($\alpha$).

3. The lawn tractor according to claims 1 or 2 characterized in that the last portion of the upper wall section (5a) of the ascending discharge conduit (5) extends towards the outlet end therof in an upwardly bent manner, and that the catcher hood (8) is provided with a curved bulge (8d) the centre of curvature (M) of which is allocated to the inside of the catcher hood, and which commences in the curved vanishing line of the upper wall section of the discharge conduit when the catcher hood is in the horizontal swivel position.

4. The lawn tractor according to claim 3 characterized in that the curvature of the upper wall section (5a) of the discharge conduit (5) extends according to an exponential function.

5. The lawn tractor according to any one of claims 1 to 4 including bracket arms (4) extending horizontally in parallel spaced relationship in the direction of travel for insertion of hose-shaped receiving means (2a) of the catcher bag (2), characterized in that the horizontal bracket arms (4) may be removed from the swivel path of the catcher hood (8) when this is in the vertical hanging position for mowing without a grass catcher bag (2).

6. The lawn tractor according to any one of claims 1 to 5 characterized in that the swivel shaft (7) of the catcher hood (8) is environed by a fixedly mounted lining means (16) in the direction of the driver's seat, extending across the width of the catcher hood and shaped to curve round the center of curvature of the swivel shaft, said lining means being grasped by a rearward edge section (8e) of the grass catcher hood ensuring a sealing effect in each swivel position of said catcher hood.

7. The lawn tractor according to any one of claims 1 to 6 characterized in that the free edge of the grass catcher hood (8) running parallel to the swivel shaft (7) is provided with a free-swinging baffle plate (9) which remains in a vertical hanging position in any swivel position of the catcher hood (8) and which is shorter in width than the clear width of a grass catcher bag (2).

8. The lawn tractor according to claim 5 characterized in that the horizontal bracket arms (4) are provided with bent-down arm sections (4a) which may be inserted into vertical guide tubes (3) spaced to coincide with the width of the grass catcher bag (2) either in or transverse to the direction of travel.

9. The lawn tractor according to claim 8 characterized in that the catcher hood (8) is provided with cup-shaped supporting shoulders (8a) which partially surround the bracket arms (4) and limit the horizontal swivel position of the catcher hood and, at the same time, clamp the inserted hose-like receiving means (2a) of the catcher bag (2) in place on the bracket arms.

10. The lawn tractor according to claim 9 characterized in that the supporting shoulders (8a) are positioned between a pair of side wall portions (8b, 8c), which are spaced apart and each form an adjusting channel, in such a recessed way that the bracket arms (4) are adjusted in parallel when the catcher hood (8) is swivelled before the shoulders reach their clamping positions.

11. The lawn tractor according to claim 8 characterized in that the catcher hood (8) is provided with an external spring catch (10) in the vicinity of its swivel seating, into which spring catch at least one of the bracket arms (4), when being inserted in the guide tube (3) transversely to the travelling direction, engages in order to secure the hanging position of the grass catcher hood.

**Revendications**

1. Tracteur de tonte avec disposé entre les quatre roues de roulement (6) un boîtier en colimaçon d'outil de fauchage (12) et un outil de fauchage, dont le couteau de fauchage (14) est muni d'ailettes de ventilation (13) mises en forme en vue du transport de la matière coupée, et avec, se présentant sous la forme d'un canal ouvert par le bas sur toute sa longueur, un canal de projection (5) de la matière coupée, dont la paroi supérieure remontant hors du boîtier d'outil de fauchage est guidée à travers les roues de roulement arrière (6) du tracteur de tonte, ainsi qu'avec un disposiutif de fixation reprenant à l'arrière et de manière libérable un sac de reprise de l'herbe (2) et avec un capot de reprise de l'herbe (8) déposé de manière inclinable autour d'un axe d'inclinaison (7) horizontal et en position horizontale fermant par le haut un sac de reprise de l'herbe éventuellement déposé à l'arrière, **caractérisé en ce que**

   - la paroi inférieure du canal de projection (5) se présente sous une forme remontant hors du boîtier d'outil de fauchage et en ce que le canal de projection s'étend jusqu'à proximité immédiate de l'axe d'inclinaison sous l'axe d'inclinaison (7), disposé transversalement à la direction de déplacement, du capot de reprise de l'herbe (8), de sorte que dans le cas d'une tonte avec sac de reprise de l'herbe et capot de reprise de l'herbe en position d'inclinaison horizontale au moins la plus grande partie de la petite section de son ouverture de sortie se trouve dans le sac de reprise de l'herbe, et que dans le cas d'une tonte sans sac de reprise de l'herbe et capot de reprise de l'herbe en position d'accrochage vertical son ouverture de sortie se trouve à distance de ce copat de reprise de l'herbe, et en ce qu'en ce qui concerne sa longueur, sa pente et son enroulement, le canal de projection est conçu suivant une technique d'écoulement telle que sous l'effet de soufflerie du couteau de fauchage (14) muni des ailettes de ventilation (13), ait lieu un transport sans colmatages de la matière coupée, jusqu'à l'ouverture de sortie.

2. Tracteur de tonte selon la revendication 1, **caractérisé en ce qu'**
   - entre son extrémité côté outil de fauchage et son extrémité côté sortie, la paroi supérieure (5a) du canal de projection (5) s'étend avec un angle de pente (**alpha**) constant sur au moins la plus grande partie de sa longueur.

3. Tracteur de tonte selon la revendication 1 ou 2, **caractérisé en ce qu'**
   - après son extrémité côté sortie et jusque dans sa dernière partie, la paroi supérieure (5a) du canal de projection (5) en pente vers le haut est cintrée vers le haut, et **en ce que**
   - le capot de reprise de l'herbe (8) est équipé d'une baie (8d) cintrée dont le centre de courbure (M) est disposé du côté inférieur du capot de reprise de l'herbe (8), et qui en position horizontale d'inclinaison du capot de reprise de l'herbe débute dans la ligne de fuite cintrée de la paroi supérieure du canal de projection.

4. Tracteur de tonte selon la revendication 3, **caractérisé en ce que**
   - le cintrage de la paroi supérieure (5a) du canal de projection (5) se dévéloppe suivant une courbe exponentielle.

5. Tracteur de tonte selon l'une des revendications 1 à 4, avec des bras de reprise (4) de réceptacles tubulaires (2a) du sac de reprise de l'herbe (2), s'étendant horizontalement, mutuellement écartés et parallèles, dans la direction du déplacement **caractérisé en ce que**
   - les bras de reprise (4) horizontaux peuvent être retirés hors du chemin de rotation du capot de reprise de l'herbe (8) en vue de la tonte sans sac de reprise de l'herbe (2) et avec le capot de reprise de l'herbe (8) en position d'accrochage vertical.

6. Tracteur de tonte selon l'une des revendications 1-5, **caractérisé en ce que**
   - du côté du siège du conducteur, l'axe d'inclinaison (7) du capot de reprise de l'herbe (8) est entouré d'un capot (16) fixe cintré qui s'étend surt la largeur du capot de reprise de l'herbe (8), dont le centre de courbure est situé sur l'axe d'inclinaison et qui est repris à étanchéité dans chacune de ses deux positions d'inclinaison par une bordure (8e) tournée vers l'arrière du capot de reprise de l'herbe (8).

7. Tracteur de tonte selon l'une des revendications 1-6, **caractérisé en ce que**
   - sur les bords libres s'étendant parallèlement à l'axe d'inclinaison (7) du capot de reprise de l'herbe (8) est disposée à inclinaison une plaque de protection contre les chocs (9) qui est suspendue verticalement dans chacune des positions d'inclinaison du capot de reprise de l'herbe et dont la largeur est inférieure à la petite largeur d'un sac de reprise de l'herbe (2).

8. Tracteur de tonte selon la revendication 5, **caractérisé en ce que**
   - les bras de reprise (4) horizontaux possèdent des bras (4a) pliés qui sont insérables au choix dans la direction de déplacement ou transversalement à cette direction, dans des tubes de guidage (3) verticaux disposés à distance de la largeur du sac de reprise de l'herbe (2).

9. Tracteur de tonte selon la revendication 8, **caractérisé en ce que**
   - le capot de reprise de l'herbe (8) est équipé de crochets de pose (8a) en forme de coquille et entourant partiellement les bras de reprise (4), et qui définissent la position d'inclinaison horizontale du capot de reprise de l'herbe tout en retenant par pinçage les réceptacles tubulaires (2a) du sac de reprise de l'herbe (2) glissés sur les bras de reprise.

10. Tracteur de tonte selon la revendication 9, **caractérisé en ce que**
    - les crochets de pose (8a) sont enfoncés entre des paires de parois latérales (8b,8c) s'étendant à distance l'une de l'autre et formant chaque fois une rigole positionnement, de telle sorte qu'avant que les crochets de pose (8a) atteignent leur position de pinçage, les bras de reprise (4) sont maintenus en position de parallélisme lors de l'inclinaison vers le bas du capot de reprise de l'herbe (8).

11. Tracteur de tonte selon la revendication 8, **caractérisé en ce que**
    - le capot de reprise de l'herbe (8) est à proximité du support à inclinaison muni d'un dispositif de retenue (10) extérieur dans lequel, en vue du maintien du capot de reprise de l'herbe en position d'accrochage, s'insère au moins un des bras de reprise (4), celui-ci étant inséré transversalement à la direction du déplacement dans son tube de guidage (3).

FIG.1

FIG.2

FIG.3

FIG. 4

FIG. 5

FIG. 6

FIG. 7

14